Europäisches Patentamt

European Patent Office

Office européen des brevets

(19)

(11) **EP 1 412 872 B1**

(12) **FASCICULE DE BREVET EUROPEEN**

(45) Date de publication et mention
de la délivrance du brevet:
**26.10.2005 Bulletin 2005/43**

(21) Numéro de dépôt: **02774858.1**

(22) Date de dépôt: **29.07.2002**

(51) Int Cl.$^7$: **G06F 17/10**

(86) Numéro de dépôt international:
**PCT/FR2002/002720**

(87) Numéro de publication internationale:
**WO 2003/012677 (13.02.2003 Gazette 2003/07)**

(54) **PROCEDE DE TRAITEMENT D'IMAGES NUMERIQUES, NOTAMMENT D'IMAGES SATELLITAIRES**

VERFAHREN ZUR VERARBEITUNG VON NUMERISCHEN BILDERN, INSBESONDERE SATELLITENBILDERN

DIGITAL IMAGE PROCESSING METHOD, IN PARTICULAR FOR SATELLITE IMAGES

(84) Etats contractants désignés:
**AT BE BG CH CY CZ DE DK EE ES FI FR GB GR IE IT LI LU MC NL PT SE SK TR**

(30) Priorité: **30.07.2001 FR 0110189**

(43) Date de publication de la demande:
**28.04.2004 Bulletin 2004/18**

(73) Titulaires:
- **INRIA INSTITUT NATIONAL DE RECHERCHE EN INFORMATIQUE ET EN AUTOMATIQUE**
  **Rocquencourt F-78153 Le Chesnay (FR)**
- **CENTRE NATIONAL DE LA RECHERCHE SCIENTIFIQUE (CNRS)**
  **75794 Paris Cedex 16 (FR)**

(72) Inventeurs:
- **JALOBEANU, André**
  **F-06000 Nice (FR)**
- **BLANC-FERAUD, Laure**
  **F-06700 Saint Laurent du Var (FR)**
- **ZERUBIA, Josiane**
  **F-06150 Cannes la Bocca (FR)**

(74) Mandataire: **Plaçais, Jean Yves**
**Cabinet Netter,**
**36, avenue Hoche**
**75008 Paris (FR)**

(56) Documents cités:
- **ALPARONE L ET AL: "TEXTURE-BASED ANALYSIS TECHNIQUES FOR THE CLASSIFICATION OF RADAR IMAGES" IEE PROCEEDINGS F. COMMUNICATIONS, RADAR & SIGNAL PROCESSING, INSTITUTION OF ELECTRICAL ENGINEERS. STEVENAGE, GB, vol. 137, no. 4 PART F, 1 août 1990 (1990-08-01), pages 276-282, XP000140287 ISSN: 0956-375X**
- **LINNETT L M: "REMOTE SENSING OF THE SEA-BED USING FRACTAL TECHNIQUES" ELECTRONICS AND COMMUNICATION ENGINEERING JOURNAL, INSTITUTION OF ELECTRICAL ENGINEERS, LONDON, GB, vol. 3, no. 5, 1 octobre 1991 (1991-10-01), pages 195-203, XP000265401 ISSN: 0954-0695**
- **ZWIGGELAAR, R. BULL, C.R.: "On the use of local and scalable Fourier transforms, fractal dimension information, and texture segmentation" FIFTH INTERNATIONAL CONFERENCE ON IMAGE PROCESSING AND ITS APPLICATIONS, 1995, pages 100-104, XP002203966 Edinburg, UK**

**Description**

L'invention concerne le traitement d'images numériques, captées par détection d'ondes électromagnétiques, telles que des prises de vue par satellites, ou aériennes.

De telles images sont susceptibles de devenir floues ou bruitées, suite à un dérèglement ou une dégradation de l'instrument qui permet de les obtenir. C'est ainsi que dans le cas d'une détection optique, une défocalisation ou des aberrations, ou encore un déplacement relatif de l'instrument (filé), modifie la fonction de transfert de l'instrument et altère la netteté de l'image. Dans le cas d'une détection optoélectronique (capteurs CCD), un bruit des capteurs détériore encore la qualité de l'image obtenue. Bien que la fonction de transfert de l'instrument puisse être paramétrée, ses paramètres sont donc sujets à évolution, de façon non contrôlée.

Dans le document ZWIGGELAAR, R. BULL, C.R.: 'On the use of local and scalable Fourier transforms, fractal dimension information, and texture segmentation' FIFTH INTERNATIONAL CONFERENCE ON IMAGE PROCESSING AND ITS APPLICATIONS, 1995, pages 100-104, Edinburg, UK, il est connu de dériver une information d'image (par exemple la texture) en dérivant une dimension fractale à partir du spectre de puissance.

L'un des buts de la présente invention est de fournir, pour chaque image ou type d'image détectée, un modèle d'image aussi exact que possible, et ce, indépendamment d'une évolution des paramètres de la fonction de transfert de l'instrument qui détecte cette image.

Un autre but de la présente invention est de fournir ce modèle sous une forme paramétrable, ainsi que les paramètres du modèle associé à une image ou un type d'image.

Un autre but de la présente invention est de fournir un tel modèle qui puisse être compatible avec un modèle paramétrable de fonction de transfert de l'instrument, en vue d'obtenir aussi les paramètres de cette fonction de transfert et, de là, reconstruire le cas échéant une image nette et non bruitée.

A cet effet, la présente invention propose d'abord un procédé de traitement d'images numériques, captées par détection d'ondes électromagnétiques. L'invention est définie dans la revendication de procédé 1 ci-jointe, ainsi que dans la revendication de dispositif 22 et la revendication de programme d'ordinateur 27.

Selon une caractéristique importante de l'invention, le procédé comprend les étapes suivantes :

a) récupérer des données d'images, relatives à des éléments constitutifs d'une image de départ,
b) appliquer au moins une transformation spectrale à au moins une partie des éléments d'image,
c) pour au moins une partie de ces éléments, appliquer aux transformées des éléments une modélisation statistique globale, paramétrable, et
d) comparer les transformées modélisées aux transformées de départ pour approcher au moins un paramètre intervenant dans le modèle statistique appliqué.

En principe, les éléments d'image conservent les mêmes caractéristiques que l'image globale, indépendamment de l'échelle (ou de la taille) de l'image. On entend par "modélisation globale" une modélisation qui, appliquée à chaque transformée d'élément d'image, revient à appliquer une modélisation à une transformée de l'image globale, tout en conservant ses caractéristiques de flou et de bruit.

Préférentiellement, la transformation de l'étape b) est une transformée de Fourier, ou encore une transformée en cosinus discrète, et le modèle statistique est, de préférence, de type fractal et comprend l'affectation d'au moins un paramètre, propre à définir une variation statistique des coefficients issus de la transformée de chaque élément, dans l'espace des fréquences.

Dans une réalisation, le procédé prévoit une détermination quantitative de ce paramètre, sur la base de la comparaison de l'étape d), le cas échéant pour en déduire ultérieurement la valeur quantitative d'un second paramètre, susceptible d'intervenir aussi dans le modèle.

Dans une autre réalisation, le procédé prévoit l'attribution d'une valeur quantitative prédéterminée à ce paramètre, pour déduire de la comparaison de l'étape d) la valeur quantitative d'un second paramètre qui intervient aussi dans le modèle.

Dans une autre réalisation encore, le procédé prévoit l'attribution de valeurs quantitatives approchées à ce paramètre et au second paramètre, ainsi qu'un affinement successif, par la comparaison de l'étape d), de la valeur quantitative du second paramètre au moins.

L'étape d) comprend avantageusement la recherche d'un extremum dans une expression mathématique représentative de la comparaison effectuée, de préférence la recherche d'un maximum de vraisemblance.

Selon une autre caractéristique avantageuse de l'invention, le modèle statistique fait intervenir en outre au moins un paramètre instrumental, sujet à variations, et à l'étape c), on approche avantageusement ce paramètre instrumental, ce qui permet, le cas échéant, de traiter l'image de départ pour en augmenter sa qualité.

Dans les réalisations ci-avant, le second paramètre précité peut avantageusement correspondre à ce paramètre instrumental.

Préférentiellement, le procédé comporte une étape préalable à l'étape b) de modélisation d'une fonction de modulation de l'instrument tenant compte d'un dérèglement de l'instrument, cette fonction faisant intervenir le paramètre instrumental précité.

La présente invention vise aussi une application du procédé ci-avant au traitement d'images satellitaires ou aériennes, obtenues par une détection optique ou infrarouge.

La présente invention peut se manifester aussi sous la forme d'un dispositif pour la mise en oeuvre du procédé ci-avant, ce dispositif comportant alors un module de modélisation statistique, comprenant une entrée pour récupérer des transformées spectrales d'éléments constitutifs d'une image de départ, et agencé pour :

- appliquer une modélisation statistique globale, paramétrable, à une partie au moins des transformées d'éléments, et
- comparer les transformées modélisées aux transformées de départ, en vue d'approcher au moins un paramètre intervenant dans le modèle statistique appliqué.

Avantageusement, le dispositif peut aussi bien opérer au sol qu'embarqué dans un aéronef, de type satellite, avion ou autre.

Dans une forme de réalisation, le dispositif comprend des moyens mémoire et des moyens de calcul pour faire fonctionner au moins le module de modélisation. Les moyens mémoire comprennent des données de programme relatives au module de modélisation et les moyens de calcul sont agencés pour coopérer avec les moyens mémoire pour mettre en oeuvre le module de modélisation.

En variante, le module de modélisation comprend des moyens mémoire et des moyens de calcul réunis dans un même composant de type FPGA ou VLSI.

Les données de programme relatives au module de modélisation, précitées, constituent un moyen important pour mettre en oeuvre l'invention. A ce titre, la présente invention vise aussi un produit programme d'ordinateur destiné à être mémorisé dans un dispositif du type ci-avant, pour mettre en oeuvre au moins le module de modélisation. Ce produit programme peut aussi bien être stocké dans une mémoire extractible (support amovible de type CD-ROM, disquette ou autre), chargé dans une mémoire de travail ou dans une mémoire permanente du dispositif (par une connexion à un réseau distant), ou encore être stocké en mémoire permanente du dispositif.

D'autres caractéristiques et avantages de l'invention apparaîtront à l'examen de la description détaillée ci-après, et des dessins annexés sur lesquels :

- la figure 1 représente schématiquement un instrument de prise de vues, en opération,

- la figure 2 représente schématiquement une structure simplifiée du dispositif selon l'invention, selon un premier mode de réalisation,

- la figure 3 représente schématiquement une structure simplifiée du dispositif selon un second mode de réalisation,

- la figure 4A représente schématiquement une image numérisée et fait apparaître les éléments d'image (pixels),

- la figure 4B représente schématiquement une transformée de Fourier FFT de l'image, dans l'exemple décrit, dans l'espace des fréquences, appliquée pour des blocs d'éléments d'image,

- la figure 5 représente un organigramme simplifié, avec les étapes principales d'un premier mode de réalisation du procédé selon l'invention,

- la figure 6 représente un organigramme plus détaillé,

- la figure 7 représente un organigramme selon une variante du premier mode de réalisation représenté sur la figure 5,

- la figure 8 représente une couronne dans l'espace des fréquences (en coordonnées polaires), pour appliquer un procédé selon un second mode de réalisation,

- la figure 9 représente la pente d'une droite de régression en fonction du paramètre instrumental $\alpha$, associée à un flou de défocalisation de l'instrument,

- la figure 10 représente un organigramme avec les étapes d'un procédé selon le second mode de réalisation précité,

- la figure 11 représente une variation modélisée (en trait plein) du logarithme de la variance V tirée du modèle statistique, en fonction du logarithme des fréquences radiales (en coordonnées polaires), à comparer avec les valeurs effectivement mesurées et calculées à partir de l'image réelle (représentées par des croix), pour la ville de Nîmes en France, et

- la figure 12 représente une variation modélisée (en trait plein) du logarithme de la variance V tirée du modèle statistique, en fonction du logarithme des fréquences radiales (en coordonnées polaires), à comparer avec les valeurs effectivement calculées à partir de l'image réelle (représentées par des croix), pour la ville de Poitiers en France.

L'annexe comprend des formules mathématiques auxquelles il est fait référence dans la présente description.

La description ci-après et les dessins annexés contiennent, pour l'essentiel, des éléments de caractère certain. Ils pourront donc non seulement servir à mieux faire comprendre l'invention, mais aussi contribuer à sa définition, le cas échéant.

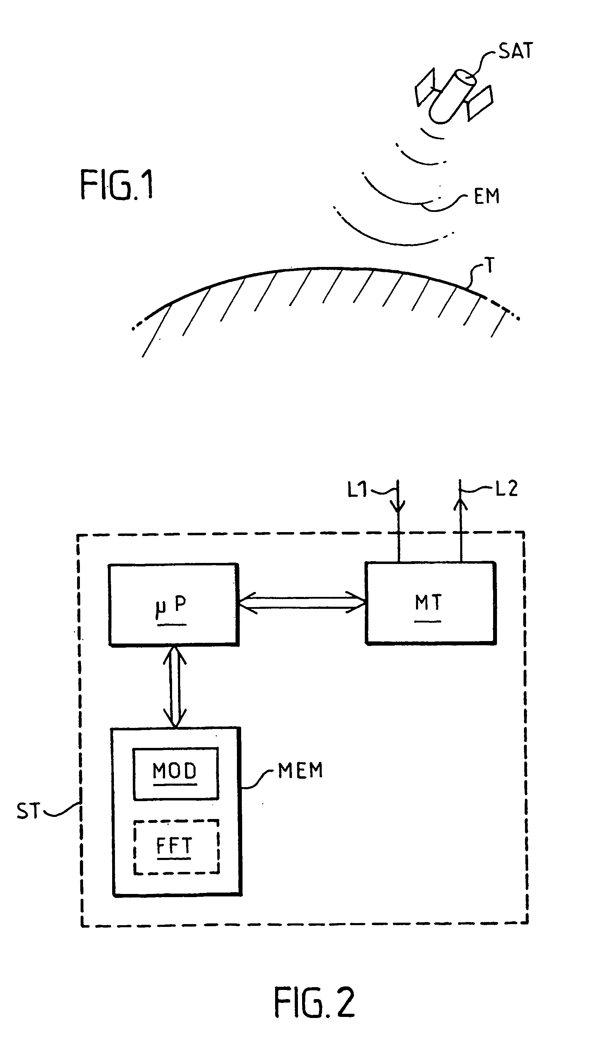

On se réfère tout d'abord à la figure 1 sur laquelle un instrument embarqué dans un aéronef SAT (satellite, avion ou autre) comprend des moyens pour fournir des prises de vues, de la Terre T dans l'exemple décrit, par détection d'ondes électromagnétiques EM. Ces ondes électromagnétiques peuvent être aussi bien des ondes optiques, que des ondes infrarouges. Typiquement, l'instrument comprend un dispositif de focalisation suivi d'une pluralité de capteurs (non représentés), par exemple des capteurs optoélectroniques de type CCD ("Charge Coupled Device"). La qualité de l'image, en terme de netteté, dépend entre autres de la focalisation de l'instrument, des aberrations instrumentales, de la diffraction des ondes dans le dispositif de focalisation et d'un éventuel déplacement relatif du satellite par rapport à l'image à observer (flou de filé).

Lorsque l'instrument est en service (par exemple dans un satellite en orbite), un réglage de l'instrument (en cas de défocalisation ou autre) est difficile. La fonction de transfert h de l'instrument permet de définir quantitativement cette défocalisation, la diffraction, ou un autre dérèglement de l'instrument. Cette fonction de transfert est paramétrable et ses paramètres sont donc sujets à variation lorsque l'instrument est en service.

Les capteurs optoélectroniques CCD présentent, eux-mêmes, un bruit électronique N, sujet à variations.

On note ci-après Y l'image construite par le modèle de flou, de bruit et autre, à partir d'une image X supposée nette et non bruitée. On note $Y_0$ l'image réellement détectée par l'instrument et $X_0$ l'image correspondante, nette et non bruitée, que l'on cherche à obtenir par le traitement d'image que l'on verra plus loin.

Avantageusement, la présente invention permet de déterminer ces paramètres évolutifs. Le cas échéant, on peut en déduire ensuite, à partir d'une image obtenue $Y_0$, floue et bruitée, une image réelle $X_0$, nette et non bruitée, comme on le verra plus loin. En outre, si la défocalisation de l'instrument est déterminée quantitativement après l'obtention du paramètre instrumental qui y est relatif, il est possible, à partir d'une commande émise au sol, de régler la focalisation de l'instrument.

En se référant à la figure 2, le dispositif dans une première forme de réalisation se présente sous la forme d'une station de travail ST comprenant un processeur µP capable de coopérer, d'une part, avec une mémoire de travail MT et, d'autre part, avec une mémoire permanente MEM. Dans la mémoire permanente MEM est stocké le module de modélisation MOD, sous la forme d'un programme informatique, destiné à être mis en oeuvre par le processeur. La station de travail ST comprend deux liaisons vers l'extérieur L1 et L2 pour, d'une part, recevoir des données d'images et, d'autre part, fournir des valeurs de paramètres du modèle statistique appliqué et/ou des paramètres instrumentaux. Le processeur µP coopère avec la mémoire de travail MT qui reçoit les données d'images par sa liaison L1 et charge le programme du module FFT prévu en mémoire permanente MEM pour appliquer une transformée de Fourier aux éléments d'images reçus, ou encore une transformée en cosinus discrète DCT. Le processeur met ensuite en oeuvre le module de modélisation MOD pour appliquer le modèle statistique aux coefficients résultant de la transformée des éléments d'images. Après comparaison avec les transformées des données d'images de départ, la mémoire de travail fournit par la liaison L2 au moins un paramètre du modèle statistique et/ou au moins un paramètre instrumental.

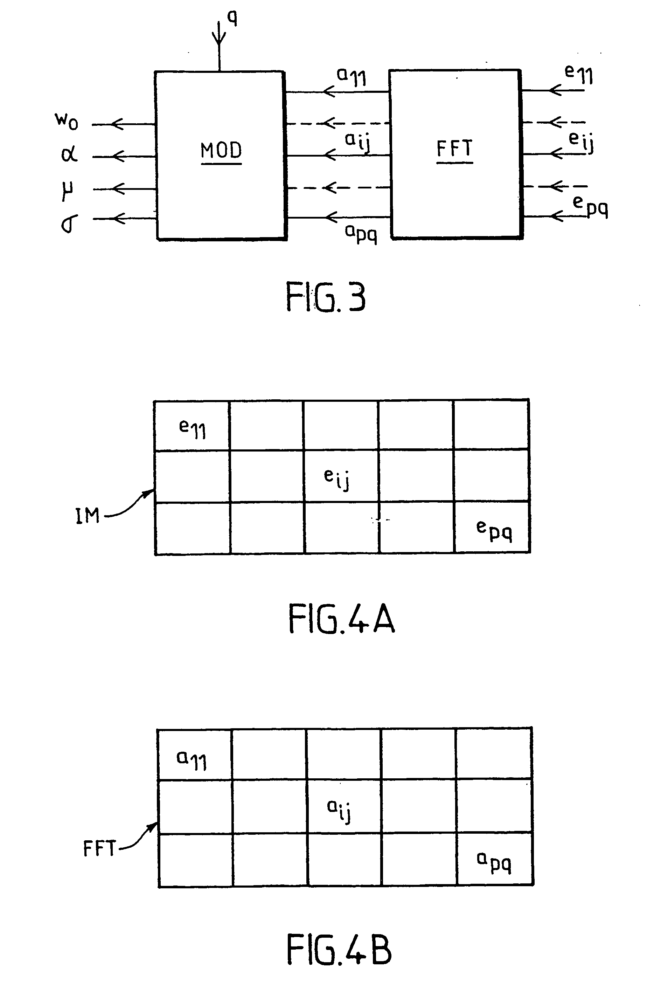

On se réfère maintenant à la figure 3 pour décrire une autre forme de réalisation du dispositif. Dans cette réalisation, le dispositif comprend au moins un composant pré-programmé, par exemple de type FPGA ("Field Programm Gate Array"), dans lequel est stocké le module de modélisation MOD. Il peut être prévu un autre composant pré-programmé FFT, propre à calculer des transformées de Fourier, ou encore des transformées en cosinus discrète DCT, pour chaque élément d'image $e_{ij}$ reçu. Le composant FFT délivre ainsi les coefficients résultant de la transformation $a_{ij}$ associés aux éléments d'images $e_{ij}$. Le composant MOD applique le modèle statistique aux transformées des éléments d'images $a_{ij}$ et compare les transformées modélisées aux transformées de départ, pour fournir au moins un paramètre du modèle statistique q, $w_0$ et/ou au moins un paramètre instrumental $\alpha$, $\mu$, $\sigma$. Dans l'exemple représenté, le module MOD reçoit la valeur prédéfinie d'un paramètre du modèle statistique q, comme on le verra plus loin. En variante, ce paramètre q peut être stocké en mémoire du composant MOD, en particulier s'il est prévu que le dispositif n'ait à traiter qu'un même type d'images. Dans une autre variante, le dispositif effectue les calculs pour sortir au moins

un paramètre instrumental $\alpha$, $\mu$, $\sigma$, en utilisant les paramètres q et $w_0$ mais sans toutefois sortir leur valeur quantitative.

En se référant à la figure 4A, l'image à traiter IM est une image numérique, bidimensionnelle dans l'exemple décrit. Les éléments d'images $e_{ij}$ se présentent donc sous la forme de pixels, auxquels sont associés différents niveaux de gris correspondant à une ou plusieurs bandes spectrales. Pour le type d'image détectée, le nombre de pixels par ligne et/ou par colonne peut être compris entre 256 et 15 000. Dans une réalisation préférée et pour un nombre suffisant d'éléments d'image, on découpe l'image IM en blocs de 512 éléments par 512 éléments et à chaque bloc, on applique une transformée FFT (ou DCT). On obtient, dans l'espace des fréquences, les coefficients de Fourier (ou les coefficients de la transformée DCT) $a_{ij}$ associés aux blocs (figure 4B). Avantageusement, le découpage de l'image par blocs permet d'estimer des paramètres d'aberrations instrumentales, en particulier l'aberration de coma. Préférentiellement, le procédé prévoit l'évaluation d'une moyenne des carrés des modules de ces coefficients $a_{ij}$ avant l'application du modèle statistique fractal ci-après.

Dans ce qui suit, on décrit plus en détail le modèle statistique appliqué aux transformées des pixels $e_{ij}$.

L'instrument détecte une image Y et la transmet sous forme numérisée, pixel par pixel, à un dispositif du type représenté sur la figure 2 ou sur la figure 3. Cette image Y est susceptible d'être floue et bruitée, tandis qu'une image originale X est nette et non bruitée. Les données d'images Y et X sont liées par la relation (1) donnée en annexe, dans laquelle N est un bruit additif supposé blanc, gaussien, stationnaire, de moyenne nulle. H est l'opérateur de convolution par le noyau h (qui représente la fonction de transfert de l'instrument, tenant compte du flou). La transformée de Fourier du noyau h correspond à une fonction de transfert de modulation de l'instrument dans l'espace des fréquences (notée ci-après "FTM").

L'écart-type $\sigma$ du bruit N, ainsi que la fonction de transfert de modulation FTM, sont sujets à variation. Pour améliorer la qualité de l'image, en termes de netteté, et pour supprimer le bruit, il convient de déterminer ces paramètres $\sigma$ et FTM avec précision. En principe, le flou de défocalisation ou le bruit constatés sur l'image globale se retrouvent en chaque pixel de l'image.

En appliquant une transformée de Fourier aux membres de l'équation (1), on obtient l'équation (3) qui lie la transformée de Fourier de l'image observée à la transformée de Fourier de l'image originale, multipliée par le facteur FTM, qui correspond à la fonction de modulation de l'instrument.

L'image originale X suit ici un modèle fractal : les caractéristiques de l'image sont invariantes en fonction de son échelle. En annexe, les relations (4), (5) et (6) définissent le modèle fractal appliqué à la transformée de Fourier de l'image originale X. Dans la relation (4), $w_0$ et q sont les paramètres du modèle, u et v sont les fréquences spatiales relatives aux coordonnées x et y de l'image (relation (5)), tandis que r est le rayon dans l'espace des fréquences (relation (6)).

La transformée de Fourier des pixels de l'image suit donc une loi gaussienne, dont l'écart-type varie de manière isotrope, en fonction du rayon r (en coordonnées polaires dans l'espace des fréquences), suivant la relation (4) de l'annexe.

La densité de probabilité a priori est donnée par la relation (7) de l'annexe. Dans cette expression, $Z_{pri}$ correspond à la constante de normalisation (ou fonction de partition) de la densité de probabilité a priori. Dans l'exemple de l'annexe, la somme $\Sigma$ intéresse tous les coefficients de la transformée de Fourier de l'image originale X.

La vraisemblance jointe des paramètres q, $w_0$, $\alpha$, $\mu$ et $\sigma$, associée à l'image observée Y est donnée par la relation (8), à partir de l'équation d'observation (3) et des étapes (9) et (10). Dans l'expression de cette vraisemblance jointe, Z est une constante de normalisation qui correspond à la densité de probabilité associée à Y, et la somme est calculée sur tous les coefficients de la transformée de Y. Les paramètres $w_0$ et q sont les paramètres du modèle fractal, tandis que les paramètres $\alpha$, $\mu$ sont des paramètres de flou associés à la fonction de modulation de l'instrument, comme on le verra plus loin. Le paramètre $\sigma$ est associé au bruit (relation (2)).

On recherche le maximum de la vraisemblance jointe des paramètres q, $w_0$, $\alpha$, $\mu$ et $\sigma$. Pour cela, on cherche un extremum dans l'expression de la relation (8). Préférentiellement, on cherche ici à minimiser l'opposé du logarithme de la vraisemblance jointe (relations (11), (12) et (13) de l'annexe). Dans l'expression du logarithme de la constante de normalisation (13), les quantités $N_x$ et $N_y$ sont les nombres de pixels de l'image en horizontal et en vertical. Ils figurent dans un terme constant qui ne sera donc pas pris en compte dans la recherche de l'extremum ci-après.

Cette recherche de l'extremum est donnée par les dérivées partielles de l'équation (11) qui sont exprimées dans la relation (14), dans laquelle $\theta$ est l'un des cinq paramètres $\alpha$, $\mu$, $\sigma$, $w_0$ et q. Le terme $l$ est donné par la relation (15) et $g_{uv}$ est donné par la relation (16). Les dérivées partielles de $g_{uv}$ par rapport aux paramètres $\theta$ sont données par les relations (17) et (18).

Les points où les dérivées partielles s'annulent sont ensuite calculés en fonction des données d'images obtenues Y, pour chaque paramètre $\alpha$, $\mu$, $\sigma$, $w_0$ et q, par des sommes dans l'espace des fréquences.

Préférentiellement, l'optimum de la vraisemblance (8) est estimé par optimisation linéaire, avec un calcul de descente de gradient. Les Demandeurs ont constaté que le critère du modèle est difficile à optimiser car il présente une vallée étroite au fond de laquelle la vraisemblance reste sensiblement constante. De préférence, un gradient conjugué est ici utilisé pour la minimisation de l'opposé du logarithme de la vraisemblance.

Les relations (19) à (24) expriment la dépendance de la fonction de modulation FTM par rapport aux paramètres de flou $\alpha$ et $\mu$. Ces dépendances sont décrites en détail plus loin.

La fonction de modulation FTM de l'instrument est modélisée par un produit de fonctions qui correspondent à différents éléments du système optique et prend donc en compte quantitativement les événements que subit l'instrument.

Physiquement, le détecteur est, dans l'exemple décrit, réalisé sous la forme d'une matrice de capteur optoélectronique de type CCD dont les pixels sont des carrés de taille $p_{ex}$. La grille d'échantillonnage est dimensionnable par des pas horizontaux et des pas verticaux $p_x$ et $p_y$. La matrice peut être agencée selon un réseau de rangées et de colonnes régulières, ou encore en quinconce. En variante, le détecteur peut ne comporter qu'une simple barrette de capteurs CCD et l'image bidimensionnelle est obtenue par le déplacement de l'aéronef (satellite ou autre) dans une direction sécante à l'axe de la barrette.

Le détecteur peut subir un phénomène de diffusion des charges, ce phénomène étant défini quantitativement par une enveloppe d'allure gaussienne, de paramètre $\mu$ dans la relation (19) donnée en annexe, où sinc est la fonction sinus cardinal.

Par ailleurs, pour un aéronef de type satellite ou avion, il faut considérer un flou lié au déplacement (filé) dont la fonction de modulation peut être obtenue par le modèle de l'annexe (relation (20)), donné ici à titre d'exemple, où $v_{ti}$ est la vitesse relative du satellite par rapport à l'objet observé et suivant l'axe des y.

Pour ce qui concerne le flou de défocalisation, la fonction de modulation optique idéale qui correspond à la diffraction par une pupille circulaire définie quantitativement par une fréquence de coupure $f_c$ et un taux d'occultation $\tau$, est multipliée, selon la relation (21) de l'annexe, par un terme exponentiel qui dépend du paramètre $\alpha$. Ce terme exponentiel définit quantitativement le flou de défocalisation (supposé d'allure gaussienne) et/ou les aberrations, faisant intervenir le paramètre $\alpha$.

Ces fonctions de modulation FTM sont données dans l'espace des fréquences où r correspond à une fréquence radiale en coordonnées polaires.

La fonction de modulation globale FTM qui résulte de tous ces événements est donnée par le produit des fonctions de modulation liées à chacun de ces événements (relation (23) de l'annexe) et son expression est donnée par la relation (24) de l'annexe. Des expressions (16) et (24), on déduit les dérivées partielles de $g_{uv}$ par rapport à $\alpha$ et à $\mu$ qui sont exprimées dans la relation (18).

Au cours de leurs essais, les Demandeurs ont constaté que le paramètre q varie peu pour un même type d'image. C'est ainsi que des prises de vues par satellite d'une ville de taille moyenne (Nîmes ou Poitiers en France) présentaient un paramètre q systématiquement voisin de 1,1, alors que des prises de vues de campagne présentent généralement un facteur q plutôt voisin de 1,3.

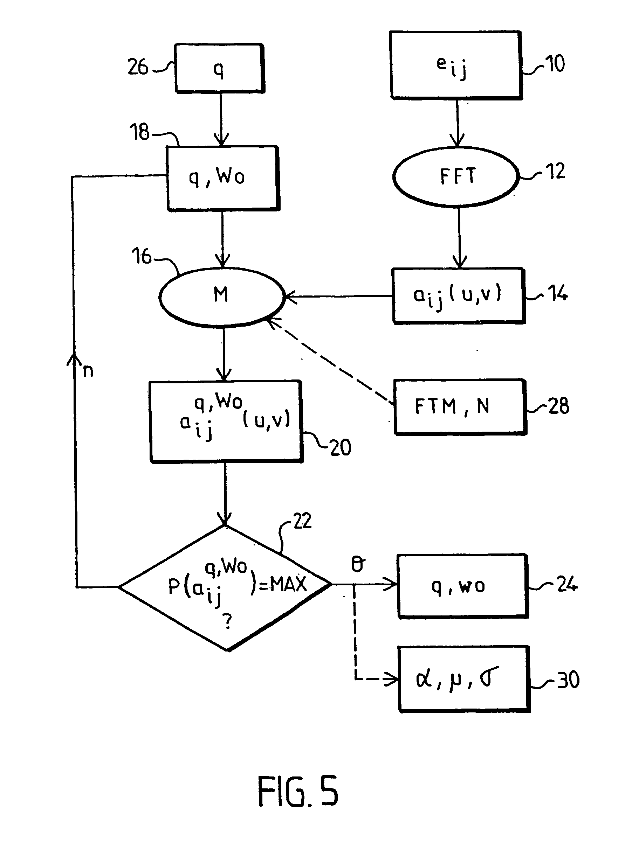

On se réfère maintenant à la figure 5 pour décrire un procédé dans une première forme de réalisation. A l'étape 10, on reçoit les données d'images relatives aux pixels $e_{ij}$ auxquelles on applique à l'étape 12 une transformée de Fourier FFT (ou une transformée DCT). Par ailleurs, à l'étape 26 on fixe le paramètre q en fonction du type d'image à observer (ville, campagne, ou autre). Dans l'exemple de la figure 5, la quantité $W_0$ représente une valeur courante du paramètre $w_0$, cette valeur courante étant à optimiser pour affiner le modèle fractal qui est appliqué à l'étape 16. A l'étape 18, on fixe donc le paramètre q et on fixe en outre, provisoirement, une valeur courante $W_0$ du paramètre $w_0$. A l'étape 16, le modèle est appliqué aux coefficients de Fourier $a_{ij}$ obtenus à l'étape 14. Dans une réalisation plus élaborée, il peut être procédé à l'étape 28 à une modélisation de la fonction de modulation FTM de l'instrument, et de son bruit N, en particulier s'il est souhaité d'obtenir les paramètres $\alpha$, $\mu$ et $\sigma$ à l'étape 30 pour traiter l'image afin de la rendre nette et non bruitée, comme on le verra plus loin.

A l'étape 20, on obtient les coefficients de Fourier modélisés, pour lesquels on effectue un test 22 de maximum de vraisemblance, par exemple en recherchant le minimum de l'opposé du logarithme de la vraisemblance, comme décrit ci-avant. Si la valeur $W_0$ attribuée au paramètre $w_0$ ne correspond pas au maximum de vraisemblance, on réitère l'étape 18 dans laquelle on affine la valeur $W_0$, et les étapes 16 et 20, jusqu'à obtenir une valeur $W_0$ qui correspond au maximum de vraisemblance estimé à l'étape 22. On en déduit enfin la valeur du paramètre $w_0$ à l'étape 24.

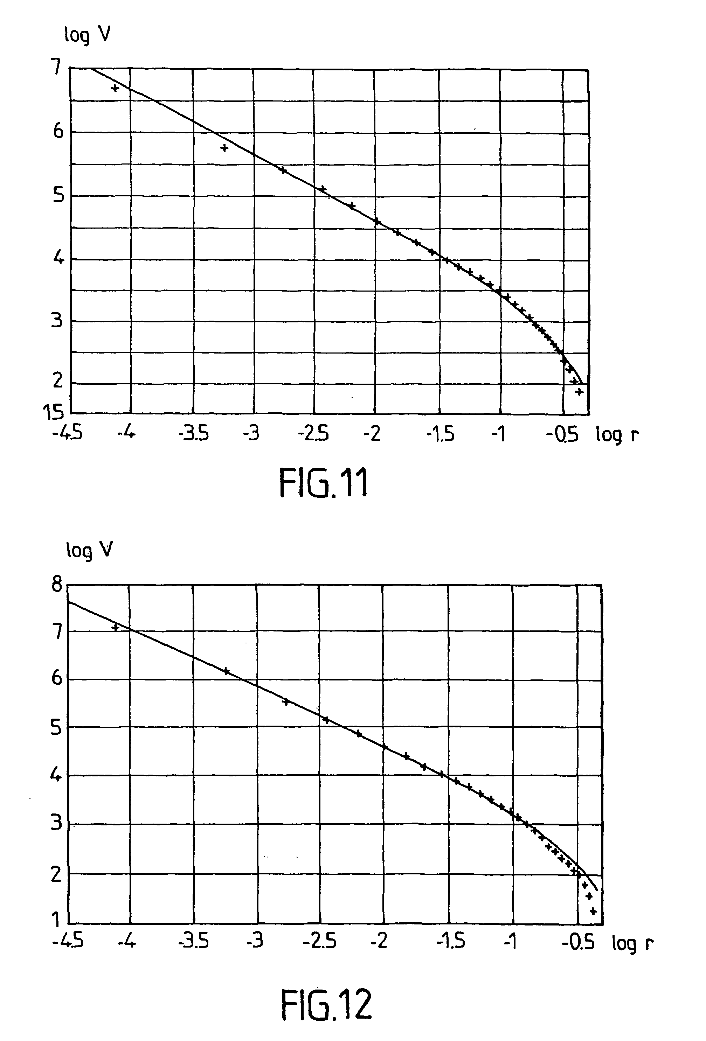

Le traitement selon le mode de réalisation représenté sur la figure 5 a été appliqué à une image de Nîmes et à une image de Poitiers, en France, en prenant la valeur du paramètre q de 1,1. De plus, une fonction de modulation FTM a été modélisée en tenant compte de la diffusion des charges sur les capteurs, mais dans lequel on a affecté une valeur nulle au paramètre $\mu$. Sur les figures 11 et 12, sont représentées les variations du logarithme de la variance V (donnée par l'expression $V = w_0^2 . r^{-2q}$), en fonction du logarithme de la fréquence radiale r. Les variations du modèle fractal sont représentées en trait plein, tandis que les valeurs mesurées sur l'image obtenue sont représentées par des croix. On obtient une correspondance satisfaisante entre le modèle et les valeurs directement mesurées.

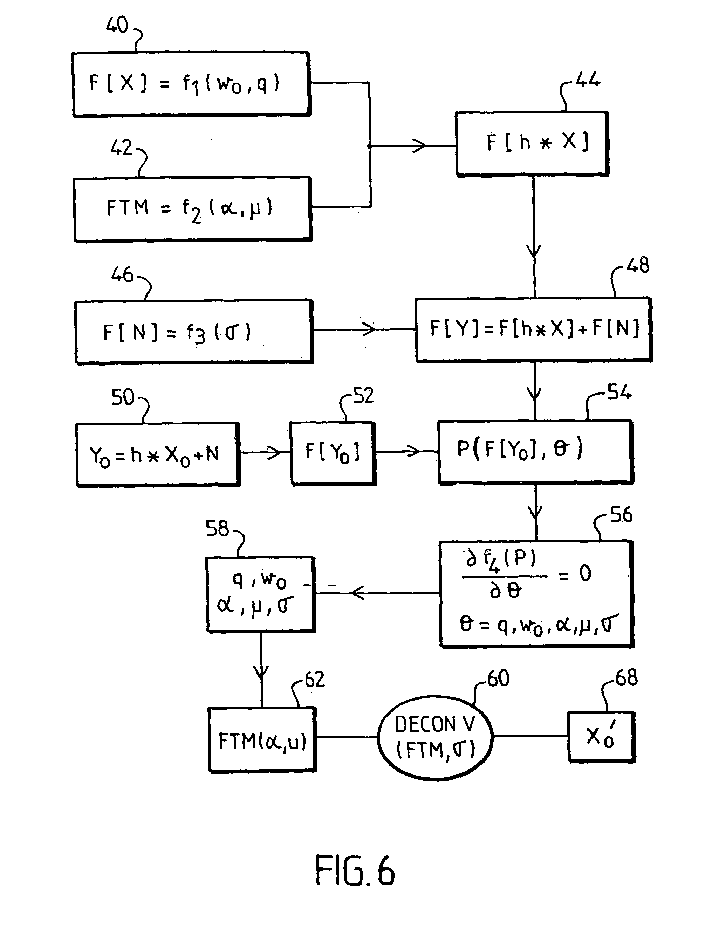

On se réfère maintenant à la figure 6 pour décrire de façon plus détaillée le modèle appliqué à l'étape 16, ainsi que la recherche du maximum de vraisemblance de l'étape 22, en tenant compte, dans ce mode de réalisation, de la fonction de modulation FTM de l'instrument et du bruit N.

Dans un premier temps, on construit les modèles fractal, de fonction de modulation FTM et de bruit qui interviennent dans le traitement. A l'étape 40, on construit le modèle fractal de l'image originale, en fonction des paramètres du modèle $w_0$ et q, selon la relation (4) de l'annexe. A l'étape 42, la fonction de modulation de l'instrument FTM est modélisée à l'aide des paramètres $\alpha$ et $\mu$, selon la relation (24) de l'annexe. A l'étape 46, on modélise la transformée de Fourier du bruit N (supposé gaussien), selon la relation (2) de l'annexe. Le modèle tenant compte de la fonction de modulation FTM est construit à l'étape 44, selon la relation (9) de l'annexe et la transformée de Fourier de l'image obtenue Y est modélisée finalement à l'étape 48, en tenant compte aussi du bruit, selon la relation (10) de l'annexe. Dans les étapes ci-avant, les données d'image effectivement observée n' interviennent pas encore.

On décrit ci-après la suite du traitement, sur la base de l'image effectivement détectée. On récupère à l'étape 50 les données de l'image observée $Y_0$, auxquelles on applique une transformée de Fourier (ou une transformée DCT) à l'étape 52. A l'étape 54, on met en forme la vraisemblance P du modèle construit à l'étape 48 et appliqué aux coefficients de la transformée de $Y_0$, selon la relation (8) de l'annexe. On recherche ensuite les points $\theta$ où les dérivées partielles de la vraisemblance P s'annulent. En pratique, à l'étape 56, on recherche des valeurs de q, $w_0$, $\alpha$, $\mu$ et $\sigma$ pour lesquelles l'opposé du logarithme de la vraisemblance P atteint des valeurs absolues minimales, selon les équations (17) et (18) de l'annexe.

En fin de traitement, à l'étape 58, on récupère les paramètres q, $w_0$, $\alpha$, $\mu$ et $\sigma$.

Dans ce qui suit, on décrit une suite du traitement, selon une version élaborée du mode de réalisation représenté sur la figure 5. A partir des paramètres $\alpha$ et $\mu$, on reconstruit à l'étape 62 la fonction de modulation de l'instrument FTM. A partir du paramètre $\sigma$ et de la fonction de modulation FTM, on déconvolue le spectre de $Y_0$, à l'étape 60, pour finalement retrouver à l'étape 68 une image proche de l'image originale $X_0'$, sensiblement nette et sans bruit. Ainsi, en partant d'une image floue et bruitée $Y_0$ (étape 50), on traite cette image $Y_0$ pour obtenir une image nette et non bruitée $X_0'$ à l'étape 68.

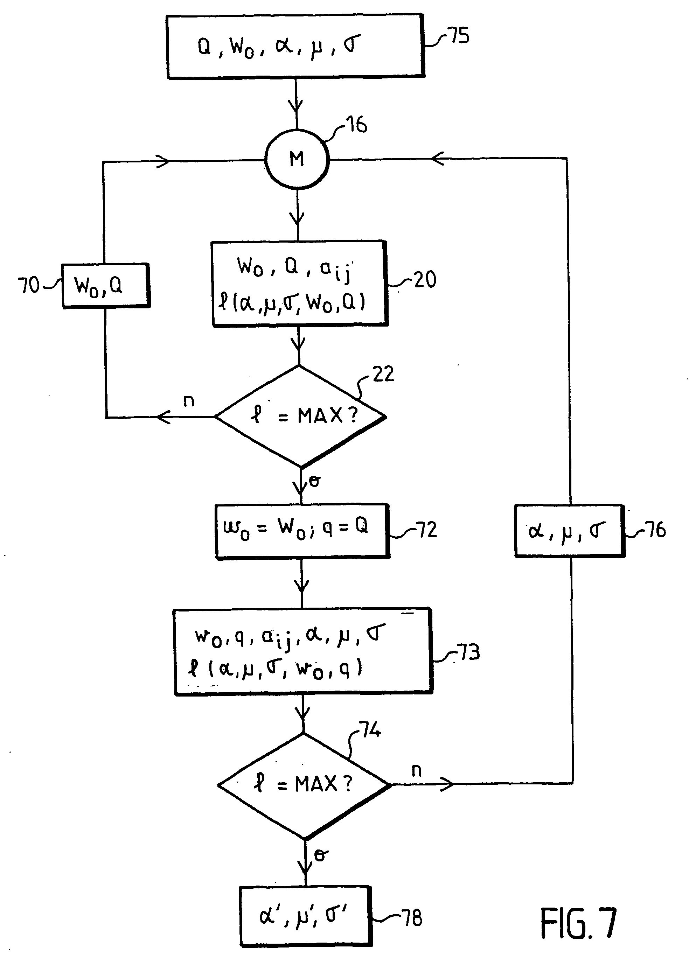

Dans le mode de réalisation représenté par la figure 7, on ne cherche pas à sortir une valeur précise des paramètres du modèle fractal q et $w_0$, mais plutôt des paramètres instrumentaux $\alpha$, $\mu$ et $\sigma$.

Ce mode de réalisation prévoit globalement deux boucles imbriquées l'une dans l'autre, l'une pour affiner la valeur des paramètres du modèle fractal q et $w_0$ et l'autre pour affiner la valeur des paramètres instrumentaux $\alpha$, $\mu$ et $\sigma$. Ce mode de réalisation s'adapte avantageusement à des types d'images pour lesquelles les paramètres q et $w_0$ sont inconnus a priori. Le traitement part de l'expression de la vraisemblance dite "marginalisée" de la relation (26) en annexe. En particulier, on recherche le maximum de la vraisemblance marginalisée VM par affinement (première boucle du traitement) des valeurs courantes Q et $W_0$ des paramètres du modèle fractal q et $w_0$, et par affinement (seconde boucle du traitement, incluant la première boucle) des valeurs courantes $\alpha$, $\mu$ et $\sigma$ des paramètres instrumentaux. On ne calcule plus ici de dérivées partielles puisque les valeurs affinées Q et $W_0$ des paramètres q et $w_0$ dépendent des valeurs des paramètres instrumentaux $\alpha$, $\mu$ et $\sigma$ (relation (27) de l'annexe).

Au départ, on commence par attribuer des valeurs courantes Q et $W_0$ aux paramètres du modèle fractal q et $w_0$, ainsi que des valeurs courantes $\alpha$, $\mu$ et $\sigma$ aux paramètres instrumentaux (étape 75). Le test 22 permet d'affiner (à l'étape 70) les valeurs Q et $W_0$ et on sort de la première boucle lorsque le maximum de vraisemblance est atteint (à une tolérance près), avec les valeurs $\alpha$, $\mu$ et $\sigma$ fixées au départ. A l'étape 72, on attribue aux paramètres q et $w_0$ les valeurs ainsi affinées Q et $W_0$.

Ensuite, le procédé se poursuit par le calcul de la vraisemblance (étape 73) avec, d'une part, ces valeurs affinées Q et $W_0$ et, d'autre part, les valeurs courantes $\alpha$, $\mu$ et $\sigma$ des paramètres instrumentaux que l'on cherche à affiner dans cette seconde boucle. Le test 74 sur cette vraisemblance permet d'affiner les valeurs courantes $\alpha$, $\mu$ et $\sigma$ à l'étape 76. Ces valeurs affinées de $\alpha$, $\mu$ et $\sigma$ sont réinjectées dans la première boucle pour déterminer les valeurs des paramètres q et $w_0$ qui correspondent au maximum de vraisemblance avec les nouvelles valeurs de $\alpha$, $\mu$ et $\sigma$. Le traitement s'arrête lorsque le maximum de vraisemblance est atteint au test 74 (à une tolérance près) et on récupère à l'étape 78 les valeurs estimées $\alpha'$, $\mu'$ et $\sigma'$ des paramètres instrumentaux qui vérifient ce maximum de vraisemblance.

Dans l'exemple représenté sur la figure 7, on ne cherche à estimer que les paramètres instrumentaux. En variante, il peut être prévu de récupérer en outre, à l'étape 78, les valeurs des paramètres q et $w_0$ qui vérifient le maximum de vraisemblance avec les valeurs estimées $\alpha'$, $\mu'$ et $\sigma'$ des paramètres instrumentaux.

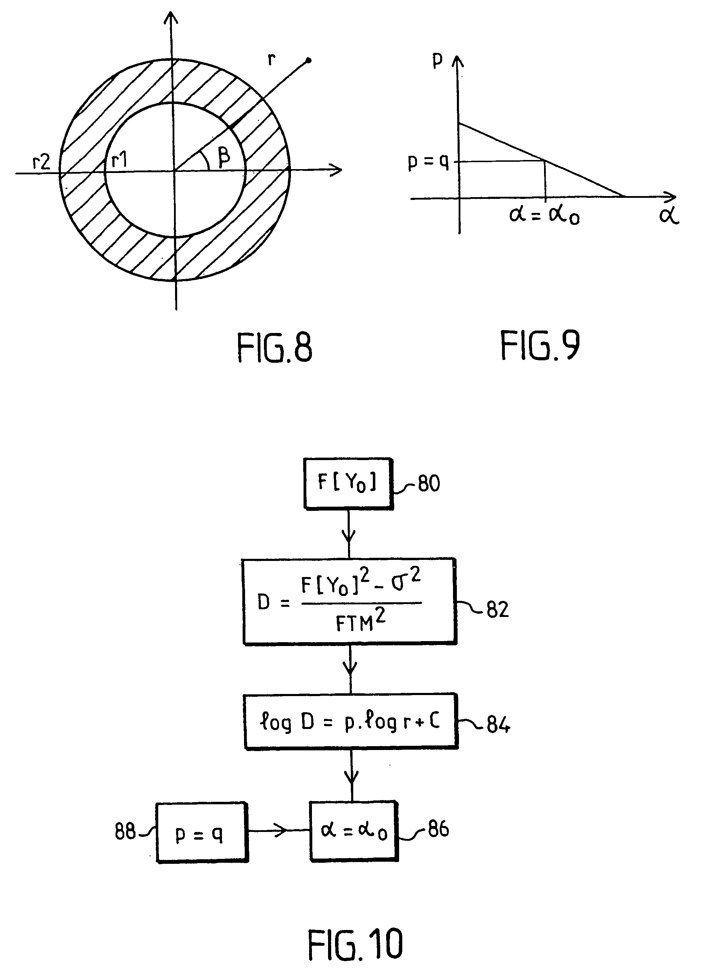

On se réfère maintenant aux figures 8, 9 et 10 pour décrire un second mode de réalisation de l'invention. Le procédé part ici de la considération de couronnes de rayons r compris entre une valeur inférieure r1 et une valeur supérieure r2, dans l'espace des fréquences radiales r (en coordonnées polaires) pour estimer une énergie D dans l'espace des fréquences. A l'étape 82 de l'organigramme représenté sur la figure 10, on déconvolue la puissance spectrale obtenue par transformée de Fourier (ou DCT) de l'image récupérée $Y_0$ en en soustrayant la variance $\sigma^2$ du bruit et en divisant le résultat de la soustraction par le carré de la fonction de modulation FTM. Ainsi, on modélise à l'étape 82 une énergie D dans la couronne représentée à la figure 8. A l'étape 84, on estime une régression linéaire entre le logarithme de cette énergie D et le logarithme de la fréquence radiale r. Cette régression est de pente p qui est le paramètre en ordonnées du graphe de la figure 9.

D'une part, l'énergie D s'exprimera en fonction de $r^{-2q}$ (formule (9) de l'annexe). D'autre part, la fonction de transfert de modulation FTM s'exprimera par une exponentielle du terme $-\alpha r^2$. La pente p varie donc linéairement par

rapport au paramètre $\alpha$ (figure 9).

Ainsi, connaissant une valeur prédéterminée du paramètre q en fonction du type d'image à traiter, lorsque la pente p vaut la valeur de q fixée au départ, on estime par coïncidence la valeur quantitative $\alpha_0$ du paramètre $\alpha$.

Ce traitement est plus rapide et plus robuste que les traitements des modes de réalisation ci-avant. Il permet, connaissant le paramètre du modèle fractal q pour un type d'image, d'obtenir le paramètre $\alpha$ de défocalisation, lorsque l'image obtenue est floue. Bien entendu, d'autres paramètres ($\mu$, $\sigma$ et $w_0$) peuvent être obtenus par ce traitement par régression, dans lequel il est possible de faire varier plusieurs paramètres. Néanmoins, en cas de repliement spectral (dans les hautes fréquences en particulier), la régression linéaire ne permet pas une estimation fiable du paramètre q. On utilisera plutôt le procédé général de la figure 7.

Bien entendu, la présente invention ne se limite pas aux formes de réalisation décrites ci-avant ; elle s'étend à d'autres variantes.

Ainsi, on comprendra que l'image récupérée peut être tridimensionnelle, tandis que les données d'images sont des voxels. L'image peut aussi être unidimensionnelle, notamment dans une application où des capteurs sont disposés en barrette pour former un faisceau de détection. Le cas échéant, une image obtenue correspondra à une incidence du faisceau.

Le terme "image" est à prendre au sens large et peut aussi bien concerner un signal unidimensionnel. Par exemple, un signal caractérisé par une intensité lumineuse peut être représentatif d'une mesure optique ou infrarouge. Si une telle mesure est dégradée, par exemple par un flou de rémanence, la modélisation de la fonction de modulation de ce flou, suivie d'un modèle fractal associé au point unidimensionnel, permet de quantifier le flou et de corriger ensuite la mesure. Il peut s'agir dans ce cas d'un signal temporel tel qu'une mesure en fonction du temps.

La présente invention peut trouver aussi une application à la détection RADAR, en particulier pour corriger le bruit des détecteurs. Au préalable, on procède à la construction d'un modèle de bruit adapté à cette application.

Les événements liés à un dérèglement de l'instrument (défocalisation, bruit des capteurs, etc) sont décrits ci-avant à titre d'exemple. D'autres événements, paramétrables, peuvent intervenir dans l'estimation de la fonction de modulation de l'instrument FTM. De même, les formules de FTM utilisées ci-avant sont données en annexe à titre d'exemple. D'autres expressions adéquates de FTM restent toutefois envisageables, selon les types d'événements.

Dans l'exemple décrit ci-avant, on a considéré des images satellitaires ou aériennes, mais l'invention peut s'appliquer, bien entendu, à tout autre type d'images, notamment des images microscopiques.

La présente invention peut se manifester, dans une version élaborée, par un traitement de l'image obtenue, floue, (le cas échéant bruitée), en vue d'obtenir une image nette. Elle peut aussi se manifester sous la forme d'un traitement pour obtenir seulement des paramètres du flou ou du bruit ($\alpha$, $\mu$, $\sigma$), ou encore, dans une version plus simple, seulement les paramètres du modèle fractal q et $w_0$. Dans le cas où le paramètre q peut être fixé à l'avance (notamment en fonction du type d'image), le traitement peut s'appliquer uniquement pour donner la valeur du paramètre $w_0$.

A partir des paramètres du modèle fractal q et $w_0$, il peut être prévu de déduire, dans un traitement ultérieur et indépendant, les paramètres de la fonction de modulation $\alpha$, $\mu$ et, le cas échéant, $\sigma$, en vue de traiter l'image détectée pour obtenir une image nette et non bruitée.

Les étapes des organigrammes représentées sur les figures 5, 6, 7 et 10 permettent de définir des instructions ou des jeux d'instructions pour des programmes informatiques susceptibles d'être mis en oeuvre par le dispositif de l'invention. A ce titre, la présente invention vise aussi de tels programmes.

Les formules de l'annexe sont données pour une transformée de Fourier FFT appliquée aux éléments d'image mais, avec une transformée en cosinus discrète DCT, on obtient des formules similaires, à quelques coefficients multiplicatifs près.

ANNEXE

$$Y = HX + N \text{ où } HX = h * X$$

où

$$N = N_1(0,\sigma^2) \text{ bruit gaussien réel} \tag{1}$$

$$N_2(0,\sigma^2) \text{ loi gaussienne bidimensionnelle ayant pour matrice de covariance } \frac{1}{2}\sigma^2 I \tag{2}$$

$$F[Y] = F[X].FTM + F[N] \text{ où } F[N] = N_2(0, \sigma^2) \tag{3}$$

$$F[X]_{uv} = N_2(0,1).w_0.r^{-q} \tag{4}$$

$$u \in \left[-\frac{1}{2}, \frac{1}{2}\right] \text{ et } v \in \left[-\frac{1}{2}, \frac{1}{2}\right] \tag{5}$$

$$r = \sqrt{u^2 + v^2} \tag{6}$$

$$P(X|w_{0,\,q}) = \frac{1}{Z_{pri}} e^{-\Sigma|F[X]_{uv}|^2/(w_0.r^{-q})^2} \tag{7}$$

$$P(Y|\alpha,\mu,\sigma,w_0,q) = \frac{1}{Z} e^{-\Sigma|F[Y]_{uv}|^2/[(w_0.r^{-q})^2 FTM^2 + \sigma^2]} \tag{8}$$

$$F[h * X]_{uv} = N_2(0, w_0^2.r^{-2q}.FTM^2) \tag{9}$$

$$F[Y]_{uv} = N_2(0, w_0^2.r^{-2q}.FTM^2 + \sigma^2) \tag{10}$$

$$-\log P(Y \mid \alpha, \mu, \sigma, w_0, q) \simeq \log Z + \sum_{u,v} \frac{|\mathcal{F}[Y]_{uv}|^2}{w_0^2.r^{-2q}FTM^2 + \sigma^2} \tag{11}$$

$$\log Z = \log \prod_{u,v} \pi \left(w_0^2.r^{-2q}FTM^2 + \sigma^2\right) \tag{12}$$

$$= N_x N_y \log \pi + \sum_{u,v} \log \left(w_0^2.r^{-2q}FTM^2 + \sigma^2\right) \tag{13}$$

$$\frac{\partial l}{\partial \theta} = \sum_{u,v} \frac{\partial g_{uv}}{\partial \theta} \frac{1}{g_{uv}} \left[1 - \frac{|\mathcal{F}[Y]_{uv}|^2}{g_{uv}}\right] \tag{14}$$

$$l(\alpha, \mu, \sigma, w_0, q) = \sum_{u,v} \left[\log \left(w_0^2.r^{-2q}FTM^2 + \sigma^2\right) + \frac{|\mathcal{F}[Y]_{uv}|^2}{w_0^2.r^{-2q}FTM^2 + \sigma^2}\right] \tag{15}$$

$$g_{uv} = w_0^2.r^{-2q}FTM^2 + \sigma^2 \tag{16}$$

$$\frac{\partial g_{uv}}{\partial w_0} = 2w_0 . r^{-2q} FTM^2, \quad \frac{\partial g_{uv}}{\partial q} = -2w_0^2 r^{-2q} FTM^2 \log r, \quad \frac{\partial g_{uv}}{\partial \sigma} = 2\sigma \tag{17}$$

$$\frac{\partial g_{uv}}{\partial \alpha} = -2r^2 . w_0^2 . r^{-2q} FTM^2, \quad \frac{\partial g_{uv}}{\partial \mu} = -2u^2 . w_0^2 . r^{-2q} FTM^2 \tag{18}$$

$$FTM_{\text{dét}} = e^{-\mu u^2} \operatorname{sinc}\left(\pi u \frac{p_x}{p_{ex}}\right) \operatorname{sinc}\left(\pi v \frac{p_y}{p_{ex}}\right) \tag{19}$$

$$FTM_{\text{filé}} = \operatorname{sinc}\left(\pi v \frac{v_{ti}}{p_{ex}}\right) \tag{20}$$

$$FTM_{\text{optique}} = e^{-\alpha r^2} FTM_{\text{diffrac}} \tag{21}$$

$$FTM_{\text{diffrac}} = \frac{J\left(1,1,2\frac{\tau}{f_c}\right) + J\left(\tau,\tau,2\frac{\tau}{f_c}\right) - 2J\left(1,\tau,2\frac{\tau}{f_c}\right)}{\pi(1-\tau^2)} \tag{22}$$

$$FTM = FTM_{\text{dét}} FTM_{\text{optique}} FTM_{\text{filé}} \tag{23}$$

$$FTM = e^{-\alpha r^2 - \mu u^2} \operatorname{sinc}\left(\pi u \frac{p_x}{p_{ex}}\right) \operatorname{sinc}\left(\pi v \frac{p_y}{p_{ex}}\right) \operatorname{sinc}\left(\pi v \frac{v_{ti}}{p_{ex}}\right) FTM_{\text{diffrac}} \tag{24}$$

$$VM = \arg\max_{\alpha,\mu,\sigma} P(Y \mid \alpha,\mu,\sigma) \tag{25}$$

$$\begin{aligned} P(Y \mid \alpha,\mu,\sigma) &= \iint_{(\mathbb{R}^+)^2} P(Y \mid \alpha,\mu,\sigma,W_0,Q)\, dW_0 dQ \\ &\simeq k\, P(Y \mid \alpha,\mu,\sigma,w_0,q) \end{aligned} \tag{26}$$

$$(w_0,q) = \arg\max_{W_0,Q} P(Y \mid \alpha,\mu,\sigma,W_0,Q) \tag{27}$$

**Revendications**

1. Procédé de traitement d'images numériques, captées par détection d'ondes électromagnétiques, **caractérisé en ce qu'**il comporte les étapes suivantes :

   a) récupérer (10) des données d'images ($e_{ij}$), relatives à des éléments constitutifs d'une image de départ,
   b) appliquer (12) au moins une transformation spectrale (FFT, DCT) à au moins une partie des éléments d'image,
   c) pour au moins une partie de ces éléments, appliquer (16) aux transformées des éléments ($a_{ij}$) une modélisation statistique globale (M), paramétrable, et
   d) comparer (22) les transformées modélisées ($a_{ij}^{q,wo}$) aux transformées de départ ($a_{ij}$) pour approcher au moins un paramètre ($q,w_0$, $\alpha,\mu,\sigma$) intervenant dans le modèle statistique appliqué.

2. Procédé selon la revendication 1, **caractérisé en ce que** le modèle statistique est de type fractal et comprend l'affectation d'au moins un paramètre (q), propre à définir une variation statistique ($w_0.r^{-q}$) desdites transformées.

3. Procédé selon l'une des revendications 1 et 2, **caractérisé en ce que** ladite transformation spectrale de l'étape b) est du type transformation de Fourier (FFT), et **en ce que** le modèle statistique intéresse des coefficients ($a_{ij}$) de Fourier résultant de la transformation.

4. Procédé selon l'une des revendications 1 et 2, **caractérisé en ce que** ladite transformation de l'étape b) est du type transformation en cosinus discrète (DCT), et **en ce que** le modèle statistique intéresse des coefficients ($a_{ij}$) résultant de la transformation.

5. Procédé selon l'une des revendications 3 et 4, prise en combinaison avec la revendication 2, **caractérisé en ce que** le paramètre du modèle fractal ($q,w_0$) est propre à définir une variation statistique ($w_0.r^{-q}$) desdits coefficients dans l'espace des fréquences (r).

6. Procédé selon la revendication 5, **caractérisé en ce que** ladite variation statistique correspond sensiblement à une courbe gaussienne, et **en ce que** le modèle attribue deux paramètres ($q,w_0$), l'un des paramètres du modèle fractal (q) étant représentatif de l'atténuation de la gaussienne à distance de son axe et l'autre paramètre ($w_0$) étant un coefficient multiplicatif.

7. Procédé selon l'une des revendications précédentes, **caractérisé en ce que** l'étape d) comprend la recherche d'un extremum dans une expression mathématique (-log(P)) représentative de ladite comparaison.

8. Procédé selon la revendication 7, **caractérisé en ce que** la comparaison de l'étape c) comprend la recherche d'un maximum de vraisemblance (P).

9. Procédé selon la revendication 8, prise en combinaison avec l'une des revendications 5 à 7, **caractérisé en ce que** la recherche du maximum de vraisemblance fait intervenir une densité de probabilités (P) sur tout l'espace des fréquences et qui intéresse tous les éléments de l'image ($N_x N_y$).

10. Procédé selon la revendication 9, **caractérisé en ce qu'**il prévoit une optimisation linéaire (56) de la densité de probabilités.

11. Procédé selon la revendication 10, **caractérisé en ce que** l'optimisation linéaire utilise un calcul de descente de gradient.

12. Procédé selon l'une des revendications précédentes, dans lequel le modèle statistique fait intervenir au moins un premier paramètre ($\alpha$, $\mu$, $\sigma$) et au moins un second paramètre ($q,w_0$),
   **caractérisé en ce que** l'étape de comparaison c) comprend les opérations suivantes :

   c1) attribuer (26) une valeur approximative ($\alpha,\mu,\sigma$) au premier paramètre,
   c2) attribuer (18) une valeur approximative ($Q,W_0$) au second paramètre,
   c3) comparer (22;74) les transformées modélisées aux transformées de départ, et
   c4) ajuster (18) successivement la valeur du second paramètre ($q,w_0$), en répétant les opérations c2) et c3).

**13.** Procédé selon la revendication 12, **caractérisé en ce que** l'étape c) comprend en outre les opérations suivantes :

c5) fixer (72) la valeur du second paramètre $(q,w_0)$ ajustée à l'opération c4), et

c6) ajuster (76) successivement la valeur du premier paramètre $(\alpha,\mu,\sigma)$, en répétant les opérations c1) et c3).

**14.** Procédé selon la revendication 13, prise en combinaison avec la revendication 8, **caractérisé en ce qu'**il comporte une répétition des opérations c1), c2), c3), c4), c5) et c6), jusqu'à obtenir (78,72) des valeurs des premier et second paramètres correspondant sensiblement au maximum de vraisemblance.

**15.** Procédé selon l'une des revendications précédentes; dans lequel le modèle statistique fait intervenir au moins un premier paramètre $(\alpha)$ et un second paramètre $(q)$, **caractérisé en ce que** l'étape de comparaison c) comprend les opérations suivantes :

c1) déterminer (84) une dépendance entre les premier et second paramètres $(q,\alpha)$, de préférence une dépendance du type régression linéaire,

c2) fixer (88) le second paramètre $(q)$, et

c3) en déduire (86) une estimation du premier paramètre $(\alpha)$.

**16.** Procédé selon l'une des revendications précédentes, **caractérisé en ce que** le modèle statistique fait intervenir en outre au moins paramètre instrumental $(\alpha, \mu, \sigma)$, sujet à variations, et **en ce qu'**à l'étape c), on approche (30; 58) ce paramètre instrumental, ce qui permet de traiter (60,62,64, 66,68) l'image de départ pour en augmenter sa qualité.

**17.** Procédé selon la revendication 16, **caractérisé en ce que** le paramètre instrumental est propre à représenter quantitativement une dégradation d'image due à un événement parmi une diffusion des ondes électromagnétiques pendant la détection $(FTM_{dét})$, une défocalisation et/ou une aberration dans la formation de l'image $(FTM_{opt})$, un bruit électronique de réception $(N)$.

**18.** Procédé selon la revendication 17, **caractérisé en ce qu'**il comporte une étape préalable à l'étape b) de modélisation (40,42,46) d'une fonction de modulation instrumentale associée à l'un au moins desdits événements, cette fonction faisant intervenir ledit paramètre instrumental.

**19.** Procédé selon la revendication 18, prise en combinaison avec la revendication 2 et l'une des revendications 12 à 15, **caractérisé en ce que** ledit premier paramètre $(\alpha,\mu,\sigma)$ est propre au modèle de la fonction de modulation instrumentale $(FTM,N)$, tandis que le second paramètre $(q,w_0)$ est propre au modèle fractal.

**20.** Procédé selon l'une des revendications 18 et 19, prises en combinaison avec la revendication 6, **caractérisé en ce que** la fonction de modulation comprend au moins une enveloppe d'allure gaussienne.

**21.** Application du procédé selon l'une des revendications précédentes au traitement d'images satellitaires ou aériennes, obtenues par une détection optique ou infrarouge.

**22.** Dispositif pour la mise en oeuvre du procédé selon l'une des revendications 1 à 20, **caractérisé en ce qu'**il comprend un module de modélisation statistique (MOD), comprenant une entrée pour récupérer des transformées spectrales d'éléments constitutifs d'une image de départ $(a_{ij})$, et agencé pour :

- appliquer une modélisation statistique globale, paramétrable, à une partie au moins des transformées d'éléments, et
- comparer les transformées modélisées aux transformées de départ, en vue d'approcher au moins un paramètre $(q,w_0,\alpha,\mu,\sigma)$ intervenant dans le modèle statistique appliqué.

**23.** Dispositif selon la revendication 22, **caractérisé en ce qu'**il comporte des moyens mémoire (MEM) comprenant des données de programme relatives au module de modélisation et des moyens de calcul $(\mu P)$ agencés pour coopérer avec les moyens mémoire pour mettre en oeuvre le module de modélisation (MOD).

**24.** Dispositif selon la revendication 22, **caractérisé en ce que** le module de modélisation comprend des moyens mémoire et des moyens de calcul réunis dans un même composant (FPGA, VLSI).

**25.** Dispositif selon l'une des revendications 22 à 24, **caractérisé en ce qu'**il est destiné à être embarqué dans un aéronef (SAT).

**26.** Dispositif selon l'une des revendications 22 à 25, **caractérisé en ce qu'**il comporte une sortie (L2) propre à délivrer au moins ledit paramètre du modèle statistique.

**27.** Produit programme d'ordinateur destiné à être mémorisé dans un dispositif selon l'une des revendications 22 à 26 pour mettre en oeuvre au moins le module de modélisation (MOD).

**Patentansprüche**

**1.** Verfahren zur Bearbeitung von digitalen (numerischen) Bildern, die auf elektromagnetischem Wege aufgenommen worden sind, **dadurch gekennzeichnet, dass** es die folgenden Stufen umfasst:

a) Erfassung (10) der Bilddaten ($e_{ij}$), die sich auf Bildelemente eines Ausgangsbildes beziehen,
b) Durchführung (12) mindestens einer spektralen Transformation (FFT, DCT) bei mindestens einem Teil der Bildelemente,
c) Erstellung (16) für mindestens einen Teil dieser Bildelemente eines statistischen Gesamtmodells (M), das parametrisierbar ist, aus den Transformierten der Bildelemente ($a_{ij}$) und
d) Durchführung eines Vergleichs (22) zwischen den Modell-Transformierten ($a_{ij}^{q,wo}$) und den Ausgangs-Transformierten ($a_{ij}$), um sich an mindestens einen Parameter (q, $w_0$, $\alpha$, $\mu$, $\sigma$), der in dem verwendeten statistischen Modell vorkommt, anzunähern.

**2.** Verfahren nach Anspruch 1, **dadurch gekennzeichnet, dass** das statistische Modell ein solches vom Fractal-Typ ist und umfasst die Zuordnung mindestens eines Parameters (q), der geeignet ist, eine statistische Variation ($w_0$. $r^{-q}$) der genannten Transformierten zu definieren.

**3.** Verfahren nach einem der Ansprüche 1 und 2, **dadurch gekennzeichnet, dass** die genannte spektrale Transformation der Stufe (b) eine solche vom Fourier-Transformationstyp (FFT) ist und dass das statistische Modell umfasst die Fourier-Koeffizienten ($a_{ij}$), die aus der Transformation resultieren.

**4.** Verfahren nach einem der Ansprüche 1 und 2, **dadurch gekennzeich net, dass** die Transformation der Stufe (b) eine solche vom diskreten Cosinus-Transformations-Typ (DCT) ist und dass das statistische Modell die Koeffizienten ($a_{ij}$) umfasst, die aus der Transformation resultieren.

**5.** Verfahren nach einem der Ansprüche 3 und 4 in Kombination mit dem Anspruch 2, **dadurch gekennzeichnet, dass** der Parameter des Fractal-Modells (q, $w_0$) geeignet ist, eine statistische Variation ($w_0$.$r^{-q}$) der genannten Koeffizienten in dem Frequenzbereich (r) zu definieren.

**6.** Verfahren nach Anspruch 5, **dadurch gekennzeichnet, dass** die genannte statistische Variation im Wesentlichen einer Gauss'schen-Kurve entspricht und dass das Modell zwei Parameter (q, $w_0$) beiträgt, wobei einer der Parameter (q) des Fractal-Modells repräsentativ für die Schwächung (Abnahme) der Gauss'schen Kurve mit dem Abstand von ihrer Achse ist und der andere Parameter ($w_0$) ein Multiplikations-Koeffizient ist.

**7.** Verfahren nach einem der vorhergehenden Ansprüche, **dadurch gekennzeichnet, dass** die Stufe (d) umfasst die Bestimmung eines Extremwerts in einem mathematischen Ausdruck (-log(P)), der den genannten Vergleich repräsentiert.

**8.** Verfahren nach Anspruch 7, **dadurch gekennzeichnet, dass** der Vergleich der Stufe (c) die Bestimmung eines Wahrscheinlichkeitsmaximums (P) umfasst.

**9.** Verfahren nach Anspruch 8 in Kombination mit einem der Ansprüche 5 bis 7, **dadurch gekennzeichnet, dass** bei der Bestimmung des Wahrscheinlichkeitsmaximums eine Wahrscheinlichkeitsdichte (P) über den gesamten Frequenzbereich berücksichtigt wird, der alle Bildelemente ($N_x N_y$) umfasst.

**10.** Verfahren nach Anspruch 9, **dadurch gekennzeichnet, dass** eine lineare Optimierung (56) der Wahrscheinlichkeitsdichte vorgenommen wird.

**11.** Verfahren nach Anspruch 10, **dadurch gekennzeichnet, dass** für die lineare Optimierung eine Berechnung des Gradientengefälles angewendet wird.

**12.** Verfahren nach einem der vorhergehenden Ansprüche, bei dem das statistische Modell mindestens einen ersten Parameter ($\alpha$, $\mu$, $\sigma$) und mindestens einen zweiten Parameter (q, $w_0$) berücksichtigt, **dadurch gekennzeichnet, dass** die Vergleichs-Stufe (c) die folgenden Operationen umfasst:

c1) Zuordnung (26) eines Näherungswertes ($\alpha$, $\mu$, $\sigma$) zu dem ersten Parameter,
c2) Zuordnung (18) eines Näherungswertes (Q, $W_0$) zu dem zweiten Parameter,
c3) Vergleich (22; 74) zwischen den Modell-Transformierten und den Ausgangs-Transformierten, und
c4) aufeinanderfolgende Einstellung (18) des Wertes des zweiten Parameters (q, $w_0$) durch Wiederholung der Operationen (c2) und (c3).

**13.** Verfahren nach Anspruch 12, **dadurch gekennzeichnet, dass** die Stufe (c) außerdem die folgenden Operationen umfasst:

c5) Festlegung (72) des Wertes des zweiten Parameters (q, $w_0$), der in der Operation (c4) eingestellt worden ist, und
c6) aufeinanderfolgende Einstellung (76) des Wertes des erstes Parameters ($\alpha$, $\mu$, $\sigma$) durch Wiederholung der Operationen (c1) und (c3).

**14.** Verfahren nach Anspruch 13 in Kombination mit Anspruch 8, **dadurch gekennzeichnet, dass** es eine Wiederholung der Operationen (c1), (c2), (c3), (c4), (c5) und (c6) umfasst, bis zur Erzielung (78, 72) von Werten für die ersten und zweiten Parameter, die im Wesentlichen dem Wahrscheinlichkeitsmaximum entsprechen.

**15.** Verfahren nach einem der vorhergehenden Ansprüche, in dem das statistische Modell mindestens einen ersten Parameter ($\alpha$) und einen zweiten Parameter (q) berücksichtigt,
**dadurch gekennzeichnet, dass** die Vergleichs-Stufe (c) die folgenden Operationen umfasst:

c1) Bestimmung (84) einer der Abhängigkeit zwischen dem ersten Parameter (q) und dem zweiten Parameter ($\alpha$), vorzugsweise einer Abhängigkeit vom linearen Regressions-Typ,
c2) Festlegung (88) des zweiten Parameters (q) und
c3) Ableitung (86) davon einer Abschätzung des ersten Parameters ($\alpha$).

**16.** Verfahren nach einem der vorhergehenden Ansprüche, **dadurch gekennzeichnet, dass** in dem statistischen Modell außerdem mindestens ein instrumenteller Parameter ($\alpha$, $\mu$, $\sigma$) berücksichtigt wird, der Variationen unterliegt, und dass man sich in der Stufe (c) an diesen instrumentellen Parameter annähert (30; 58), wodurch die Bearbeitung (60, 62, 64, 66, 68) des Ausgangs-Bildes zur Verbesserung seiner Qualität ermöglicht wird.

**17.** Verfahren nach Anspruch 16, **dadurch gekennzeichnet, dass** der instrumentelle Parameter geeignet ist, eine Bild-Verschlechterung als Folge eines der folgenden Ereignisse quantitativ zu repräsentieren: Streuung der elektromagnetischen Wellen während der Erfassung ($FTM_{det}$), Defokussierung und/oder Aberration bei der Bilderzeugung ($FTM_{opt}$) und elektronisches Rauschen bei der Aufnahme (N).

**18.** Verfahren nach Anspruch 17, **dadurch gekennzeichnet, dass** es eine der Stufe (b) vorhergehende Stufe zur Modellbildung (40, 42, 46) aus einer instrumentellen Modulierungsfunktion, die mit mindestens einem der genannten Ereignisse im Zusammenhang steht, umfasst, wobei diese Funktion den instrumentellen Parameter berücksichtigt.

**19.** Verfahren nach Anspruch 18 in Kombination mit Anspruch 2 und einem der Ansprüche 12 bis 15, **dadurch gekennzeichnet, dass** der erste Parameter ($\alpha$, $\mu$, $\sigma$) dem Modell der instrumentellen Modulationsfunktion (FTM, N) zugehörig ist, während der zweite Parameter (q, $w_0$) dem Fractal-Modell zugehörig ist.

**20.** Verfahren nach einem der Ansprüche 18 und 19 in Kombination mit dem Anspruch 6, **dadurch gekennzeichnet, dass** die Modulationsfunktion mindestens eine Umhüllungskurve des Gauss'schen Verlaufs umfasst.

**21.** Anwendung des Verfahrens nach einem der vorhergehenden Ansprüche zur Bearbeitung von Satelliten- oder Luftbildern, die durch optische oder Infrarot-Bilderzeugung hergestellt wurden.

**22.** Vorrichtung zur Durchführung des Verfahrens nach einem der Ansprüche 1 bis 20, **dadurch gekennzeichnet, dass** sie einen statistischen ModellbildungsModul (MOD) umfasst, der eine Eingabe für die Erfassung der spektralen Transformierten von Elementen, die ein Ausgangsbild aufbauen ($a_{ij}$), aufweist und vorgesehen ist zur:

- Anwendung einer globalen statistischen Modellbildung, die parametrisierbar ist, auf mindestens einen Teil der Bildelement-Transformierten und
- zum Vergleich der Modell-Transformierten mit den Ausgangs-Transformierten, um sich an mindestens einen Parameter ($q$, $w_0$, $\alpha$, $\mu$, $\sigma$) anzunähern, der in dem angewendeten statistischen Modell berücksichtigt ist.

**23.** Vorrichtung nach Anspruch 22, **dadurch gekennzeichnet, dass** er umfasst Speichereinrichtungen (MEM), die Programmdaten in Bezug auf den Modellbildungsmodul enthalten, und Recheneinrichtungen ($\mu$P), die bestimmt sind für die Kooperation mit den Speichereinrichtungen, um den Modellbildungsmodul (MOD) in der Praxis anzuwenden.

**24.** Vorrichtung nach Anspruch 22, **dadurch gekennzeichnet, dass** der Modellbildungsmodul Speichereinrichtungen und Recheneinrichtungen umfasst, die in dem gleichen Bauelement (FPGA, VLSI) zusammengefasst sind.

**25.** Vorrichtung nach einem der Ansprüche 22 bis 24, **dadurch gekennzeichnet, dass** sie dazu bestimmt ist, in einem Luftfahrzeug (SAT) transportiert zu werden.

**26.** Vorrichtung nach einem der Ansprüche 22 bis 25, **dadurch gekennzeichnet, dass** sie eine Ausgabe (L2) umfasst, die geeignet ist, mindestens den genannten Parameter des statistischen Modells zu liefern.

**27.** Computersoftware-Produkt, das dazu bestimmt ist, in einer Vorrichtung nach einem der Ansprüche 22 bis 26 gespeichert zu werden zur praktischen Verwendung mindestens des Modellbildungsmoduls (MOD).

**Claims**

**1.** Method of processing digital images, picked up by detection of electromagnetic waves, **characterized in that** it comprises the following steps:

a) recovering (10) data of images ($e_{ij}$), pertaining to constituent elements of a starting image,
b) applying (12) at least one spectral transformation (FFT, DCT) to at least part of the image elements,
c) for at least part of these elements, applying (16) to the transforms of the elements ($a_{ij}$) a parametrizable global statistical modelling (M), and
d) comparing (22) the modelled transforms ($a_{ij}{}^{q,wo}$) with the starting transforms ($a_{ij}$) so as to approximate at least one parameter ($q$, $w_0$, $\alpha$, $\mu$, $\sigma$) involved in the statistical model applied.

**2.** Method according to Claim 1, **characterized in that** the statistical model is of fractal type and comprises the assignment of at least one parameter ($q$), suitable for defining a statistical variation ($w_0.r^{-q}$) of the said transforms.

**3.** Method according to one of Claims 1 and 2, **characterized in that** the said spectral transformation of step b) is of the Fourier transformation type (FFT), and **in that** the statistical model concerns Fourier coefficients ($a_{ij}$) resulting from the transformation.

**4.** Method according to one of Claims 1 and 2, **characterized in that** the said transformation of step b) is of the discrete cosine transformation type (DCT), and **in that** the statistical model concerns coefficients ($a_{ij}$) resulting from the transformation.

**5.** Method according to one of Claims 3 and 4, taken in combination with Claim 2, **characterized in that** the parameter of the fractal model ($q$, $w_0$) is suitable for defining a statistical variation ($w_0.r^{-q}$) of the said coefficients in the frequency space ($r$).

**6.** Method according to Claim 5, **characterized in that** the said statistical variation corresponds substantially to a Gaussian curve, and **in that** the model allocates two parameters ($q$, $w_0$), one of the parameters of the fractal model ($q$) being representative of the attenuation of the Gaussian remote from its axis and the other parameter ($w_0$) being a multiplicative coefficient.

7. Method according to one of the preceding claims, **characterized in that** step d) comprises the search for an extremum in a mathematical expression (-log(P)) representative of the said comparison.

8. Method according to Claim 7, **characterized in that** the comparison of step c) comprises the search for a likelihood maximum (P).

9. Method according to Claim 8, taken in combination with one of Claims 5 to 7, **characterized in that** the search for the likelihood maximum involves a probability density (P) over the whole of the frequency space and which concerns all the elements of the image ($N_xN_y$).

10. Method according to Claim 9, **characterized in that** it envisages a linear optimization (56) of the probability density.

11. Method according to Claim 10, **characterized in that** the linear optimization uses a gradient descent calculation.

12. Method according to one of the preceding claims, in which the statistical model involves at least one first parameter ($\alpha$, $\mu$, $\sigma$) and at least one second parameter ($q$, $w_0$),
**characterized in that** the comparison step c) comprises the following operations:

> c1) allocating (26) an approximate value ($\alpha$, $\mu$, $\sigma$) to the first parameter,
> c2) allocating (18) an approximate value ($Q$, $W_0$) to the second parameter,
> c3) comparing (22; 74) the modelled transforms with the starting transforms, and
> c4) successively adjusting (18) the value of the second parameter ($q$, $w_0$), by repeating operations c2) and c3).

13. Method according to Claim 12, **characterized in that** step c) furthermore comprises the following operations:

> c5) fixing (72) the value of the second parameter ($q$, $w_0$) as adjusted in operation c4), and
> c6) successively adjusting (76) the value of the first parameter ($\alpha$, $\mu$, $\sigma$), by repeating operations c1) and c3).

14. Method according to Claim 13, taken in combination with Claim 8, **characterized in that** it comprises a repetition of operations c1), c2), c3), c4), c5) and c6), until values of the first and second parameters corresponding substantially to the likelihood maximum are obtained (78, 72).

15. Method according to one of the preceding claims, in which the statistical model involves at least one first parameter ($\alpha$) and one second parameter ($q$),
**characterized in that** the comparison step c) comprises the following operations:

> c1) determining (84) a dependency between the first and second parameters ($q$, $\alpha$), preferably a dependency of the linear regression type,
> c2) fixing (88) the second parameter ($q$), and
> c3) deducing therefrom (86) an estimate of the first parameter ($\alpha$).

16. Method according to one of the preceding claims, **characterized in that** the statistical model furthermore involves at least one instrumental parameter ($\alpha$, $\mu$, $\sigma$), subject to variations, and **in that**, in step c), this instrumental parameter is approximated (30; 58), thereby making it possible to process (60, 62, 64, 66, 68) the starting image so as to increase the quality thereof.

17. Method according to Claim 16, **characterized in that** the instrumental parameter is suitable for quantitatively representing a degradation of image due to an event from among a scattering of the electromagnetic waves during detection ($FTM_{det}$), a defocusing and/or an aberration in the formation of the image ($FTM_{opt}$), electronic reception noise (N).

18. Method according to Claim 17, **characterized in that** it comprises a step prior to step b) of modelling (40, 42, 46) an instrumental modulation function associated with one at least of the said events, this function involving the said instrumental parameter.

19. Method according to Claim 18, taken in combination with Claim 2 and one of Claims 12 to 15, **characterized in that** the said first parameter ($\alpha$, $\mu$, $\sigma$) is specific to the model of the instrumental modulation function (FTM, N), while the second parameter ($q$, $w_0$) is specific to the fractal model.

**20.** Method according to one of Claims 18 and 19, taken in combination with Claim 6, **characterized in that** the modulation function comprises at least one envelope of Gaussian shape.

**21.** Application of the method according to one of the preceding claims to the processing of satellite or aerial images, obtained by optical or infrared detection.

**22.** Device for the implementation of the method according to one of Claims 1 to 20, **characterized in that** it comprises a statistical modelling module (MOD), comprising an input for recovering spectral transforms of constituent elements of a starting image ($a_{ij}$), and devised so as to:

- apply a parametrizable global statistical modelling to part at least of the transforms of elements, and
- compare the modelled transforms with the starting transforms, with a view to approximating at least one parameter ($q$, $w_0$, $\alpha$, $\mu$, $\sigma$) involved in the statistical model applied.

**23.** Device according to Claim 22, **characterized in that** it comprises memory means (MEM), comprising program data pertaining to the modelling module and calculation means ($\mu$P) devised so as to cooperate with the memory means in order to implement the modelling module (MOD).

**24.** Device according to Claim 22, **characterized in that** the modelling module comprises memory means and calculation means amalgamated into one and the same component (FPGA, VLSI).

**25.** Device according to one of Claims 22 to 24, **characterized in that** it is intended to be carried on board an aircraft (SAT).

**26.** Device according to one of Claims 22 to 25, **characterized in that** it comprises an output (L2) suitable for delivering at least the said parameter of the statistical model.

**27.** Computer program product intended to be stored in a device according to one of Claims 22 to 26 so as to implement at least the modelling module (MOD).

FIG.1

FIG.2

EP 1 412 872 B1

FIG. 3

FIG. 4A

FIG. 4B

19

FIG. 5

FIG.6

FIG. 7

FIG.8

FIG.9

FIG.10

FIG.11

FIG.12